# EUROPEAN PATENT APPLICATION

(11) **EP 4 610 439 A1**
(43) Date of publication of application: **03.09.2025**
(21) Application number: 23882753.9
(22) Date of filing: 27.10.2023
(51) Int. Cl.: E02F 9/20, E02F 9/24, E02F 9/26, G05D 1/00, G05D 1/49

(54) **SHOVEL**

(30) Priority: 28.10.2022 JP 2022173789
(71) Applicant: Sumitomo Construction Machinery Co., Ltd., Tokyo 141-6025 (JP)
(72) Inventor: IZUMIKAWA, Takeya, Chiba-shi, Chiba 263-0001 (JP); MORIMOTO, Takaaki, Chiba-shi, Chiba 263-0001 (JP)
(74) Representative: Louis Pöhlau Lohrentz
(86) International application number: PCT/JP2023/038870
(87) International publication number: WO 2024/090551

(57) **Abstract**

A shovel includes a lower traveling body, and an upper swivel body mounted on the lower traveling body and capable of freely swiveling, wherein configurations are made to set an attribute to a space surrounding the shovel based on an output from a space recognition device provided in the upper swivel body, and to control the shovel based on the attribute set to the space.

## Description

### TECHNICAL FIELD

The disclosures herein relate to shovels.

### BACKGROUND ART

In related arts, various technologies have been proposed to support an operation of an operator when working with a shovel.

For example, Patent Literature (PTL) 1 proposes a technology to automatically perform at least one of piling up earth or burying the earth. Thus, in the technology described in PTL 1, a burden on the operator is reduced.

### CITATION LIST

### PATENT LITERATURE

[PTL 1] International Publication no. WO2020/162428

### SUMMARY OF THE INVENTION

### PROBLEMS TO BE SOLVED BY THE INVENTION

However, PTL 1 is a technology for causing the shovel to perform work automatically, and in order for the shovel to perform work automatically, it is necessary that the surroundings are suitable for the work. In other words, in an actual work site, the shovel needs to perform the work after recognizing what kind of space the surroundings are.

An aspect of the present invention provides a technology for improving safety when a shovel performs work by recognizing a surrounding space.

### MEANS OF SOLVING THE PROBLEM

A shovel includes a lower traveling body, and an upper swivel body mounted on the lower traveling body and capable of freely swiveling, wherein configurations are made to set an attribute to a space surrounding the shovel based on an output from a space recognition device provided in the upper swivel body, and to control the shovel based on the attribute set to the space.

### EFFECTS OF THE INVENTION

According to an aspect of the present invention, the shovel recognizes its surrounding space, thereby improving safety when performing work.

### BRIEF DESCRIPTION OF THE DRAWINGS

[FIG. 1] FIG. 1 is a side view of a shovel as an excavator according to embodiment one.
[FIG. 2] FIG. 2 is a drawing illustrating a configuration example of a drive control system of the shovel according to embodiment one.
[FIG. 3] FIG. 3 is a functional block diagram illustrating a configuration example of a shovel support device according to embodiment one.
[FIG. 4] FIG. 4 is a drawing illustrating a configuration example of a hydraulic system mounted on a shovel according to embodiment one.
[FIG. 5] FIG. 5 is a schematic diagram illustrating a configuration example of an electric operation system of the shovel according to embodiment one.
[FIG. 6] FIG. 6 is a drawing illustrating a correspondence between a detected object and a space divided based on the object.
[FIG. 7] FIG. 7 is a drawing illustrating a correspondence among the detected object, construction data illustrating a three-dimensional shape after construction, and the space divided based on the construction data and the object.
[FIG. 8] FIG. 8 is a drawing illustrating a first example of a space set based on an object existing near the shovel by a setting part according to embodiment one.
[FIG. 9] FIG. 9 is a drawing illustrating a second example of the space set based on the object existing near the shovel by the setting part according to embodiment one.
[FIG. 10] FIG. 10 is a flowchart illustrating processing performed by the shovel support device according to embodiment one.
[FIG. 11] FIG. 11 is a schematic diagram illustrating an example of a configuration of a shovel support system according to embodiment three.

### DESCRIPTION OF THE PREFERRED EMBODIMENTS

In the following, embodiments of the present invention will be described with reference to the accompanying drawings. In addition, the embodiments described below are not intended to limit the invention but are examples, and all features and combinations thereof described in the embodiments are not necessarily essential to the invention. In the drawings, the same or corresponding constituent elements are denoted with the same reference numerals, and redundant descriptions will be omitted.

### (EMBODIMENT ONE)

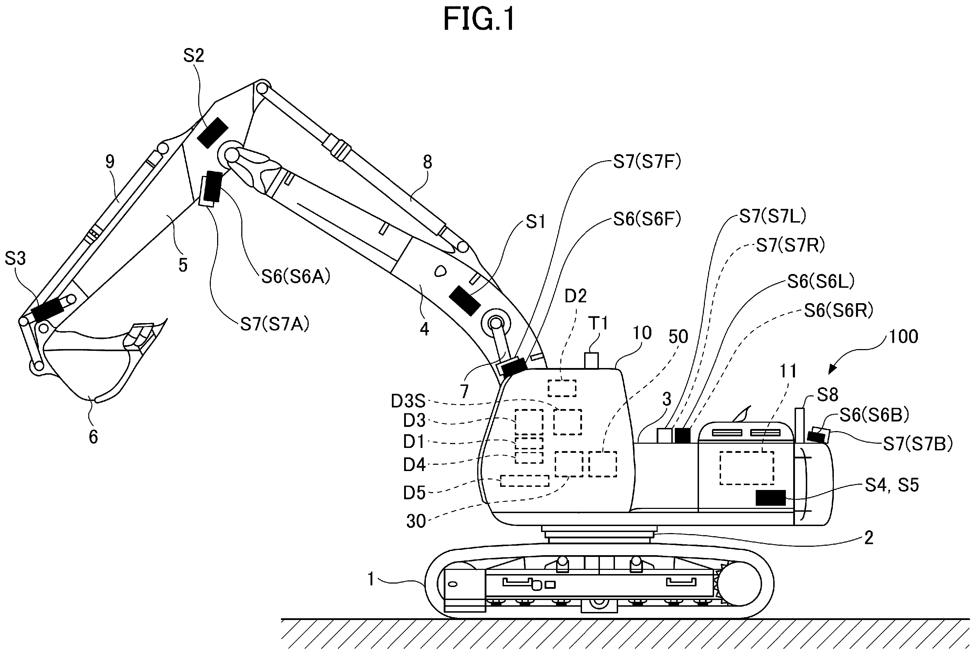

First, an outline of a shovel 100 according to the present embodiment will be described with reference to FIG. 1. FIG. 1 is a side view of the shovel 100 as an excavator according to embodiment one. An upper swivel body 3 is mounted on the lower traveling body 1 of the shovel 100 capable of swiveling via a swivel mechanism 2. A boom 4 is attached to the upper swivel body 3. An arm 5 is attached to an end of the boom 4, and a bucket 6 as an end attachment is attached to an end of the arm 5. The end attachment may be a slope bucket or a bucket for dredging.

The boom 4, the arm 5, and the bucket 6 are included in an excavation attachment as an example of an attachment, and are hydraulically driven by a boom cylinder 7, an arm cylinder 8, and a bucket cylinder 9, respectively. A boom angle sensor S1 is attached to the boom 4, an arm angle sensor S2 is attached to the arm 5, and a bucket angle sensor S3 is attached to the bucket 6. The excavation attachment may be provided with a bucket tilt mechanism.

The boom angle sensor S1 detects a rotation angle of the boom 4. In the present embodiment, the boom angle sensor S1 is an acceleration sensor and can detect the boom angle, which is the rotation angle of the boom 4 with respect to the upper swivel body 3. The boom angle, for example, is the minimum angle when the boom 4 is lowered most, and increases as the boom 4 is raised.

The arm angle sensor S2 detects the rotation angle of the arm 5. In the present embodiment, the arm angle sensor S2 is an acceleration sensor and can detect the arm angle, which is the rotation angle of the arm 5 with respect to the boom **4.** The arm angle, for example, is the minimum angle when the arm 5 is closed most, and increases as the arm 5 is opened.

The bucket angle sensor S3 detects the rotation angle of the bucket 6. In the present embodiment, the bucket angle sensor S3 is an acceleration sensor and can detect the bucket angle, which is the rotation angle of the bucket 6 with respect to the arm 5. The bucket angle, for example, becomes the minimum angle when the bucket 6 is closed to the maximum extent, and increases as the bucket 6 is opened.

The boom angle sensor S1, the arm angle sensor S2, and the bucket angle sensor S3 may be a potentiometer using a variable resistor, a stroke sensor for detecting the stroke amount of the corresponding hydraulic cylinder, a rotary encoder, or the like, for detecting the rotation angle around a connecting pin. The boom angle sensor S1, the arm angle sensor S2, and the bucket angle sensor S3 constitute an attitude sensor for detecting the attitude of the excavation attachment.

The upper swivel body 3 is provided with a cabin 10 which is a control cabin, and has a power source such as an engine 11 mounted thereon. The upper swivel body 3 is provided with a body tilt sensor S4, a swivel angular velocity sensor S5, an imaging device S6, and a space recognition device S7. The upper swivel body 3 is provided with a communication device T1 and a positioning device S8.

The body tilt sensor S4 is configured to detect a tilt of the upper swivel body 3 with respect to a predetermined plane. In the present embodiment, the body tilt sensor S4 is an acceleration sensor that detects the tilt angle of the upper swivel body 3 around the longitudinal axis and the tilt angle of the upper swivel body 3 around the lateral axis with respect to a horizontal plane. The longitudinal axis and the lateral axis of the upper swivel body 3, for example, intersect at a shovel center point, and are perpendicular to each other orthogonal and pass through a single point on the swivel axis of the shovel 100, which is the shovel center point.

The swivel angular velocity sensor S5 is configured to detect the swivel angular velocity of the upper swivel body **3.** In the present embodiment, the swivel angular velocity sensor S5 is a gyro sensor. The swivel angular velocity sensor S5 may be a resolver, a rotary encoder, or the like. The swivel angular velocity sensor S5 may detect the swivel velocity. The swivel velocity may be calculated from the swivel angular velocity.

The imaging device S6 is configured to acquire an image of the periphery of the shovel 100. In the present embodiment, the imaging device S6 includes a front camera S6F for capturing the space in front of the shovel 100, a left camera S6L for capturing the space to the left of the shovel 100, a right camera S6R for capturing the space to the right of the shovel 100, a rear camera S6B for capturing the space behind the shovel 100, and an arm camera S6A for capturing the space near the bucket 6.

The imaging device S6 is, for example, a monocular camera having an image sensor such as a CCD or CMOS, and outputs a captured image to a display device 40.

The front camera S6F is, for example, mounted on a roof of the cabin 10. The left camera S6L is mounted on the upper surface left end of the upper swivel body 3. The right camera S6R is mounted on the upper surface right end of the upper swivel body 3. The rear camera S6B is mounted on the upper surface rear end of the upper swivel body 3. The arm camera S6A is mounted on the upper lateral surface of the arm 5.

In the present embodiment, the imaging device S6 is provided in the above-described arrangement, so that an image of an object existing around the shovel 100 can be captured.

The space recognition device S7 is configured to recognize the state of the surrounding space of the shovel 100. The space recognition device S7 includes a rear space recognition device S7B that detects the space behind the shovel 100, a left space recognition device S7L that detects the space to the left of the shovel 100, a right space recognition device S7R that detects the space to the right of the shovel 100, a front space recognition device S7F that detects the space in front of the shovel 100, and an arm space recognition device S7A that detects the vicinity of the bucket 6 where the shovel 100 works.

The space recognition device S7 may use LIDAR to detect an object existing around the shovel 100. The LIDAR measures distances between one million or more points within the monitoring range and the LIDAR, for example. The present embodiment is not limited to a method using LIDAR, and any space recognition device that can measure a distance to an object may be used. For example, a stereo camera, a distance image camera, or a distance measuring device such as a millimeter wave radar may be used. When the millimeter wave radar or the like is used as the space recognition device S7, a large number of signals (laser light, etc.) may be transmitted from the space recognition device S7 toward the object and the distance and direction of the object may be derived from reflected signals by receiving the reflected signals.

The rear space recognition device S7B is attached to the rear end of the upper surface of the upper swivel body 3. The left space recognition device S7L is attached to the left end of the upper surface of the upper swivel body 3. The right space recognition device S7R is attached to the right end of the upper surface of the upper swivel body 3. The front space recognition device S7F is attached to the front end of the upper surface of the cabin 10. The arm space recognition device S7A is attached to the upper lateral surface of the arm 5.

The space recognition device S7 may be configured to detect a predetermined object in a predetermined area set surrounding the shovel 100. For example, the space recognition device S7 may have a person detection function configured to detect a person while distinguishing between the person and an object other than a person.

The communication device T1 controls communication between the shovel 100 and the outside. The communication device T1 controls, for example, wireless communication between an external GNSS (Global Navigation Satellite System) survey system and the shovel 100. The shovel 100 can acquire design data via wireless communication by using the communication device T1. However, the shovel 100 may acquire the design data by using a semiconductor memory or the like. The design data includes three-dimensional design data.

The positioning device S8 is configured to acquire information concerning the position of the shovel 100. In the present embodiment, the positioning device S8 is configured to measure the position and direction of the shovel 100. Specifically, the positioning device S8 is a GNSS receiver incorporating an electronic compass, and measures the latitude, longitude, and altitude of the current position of the shovel 100, and measures the direction of the shovel 100.

An input device D1, a sound output device D2, a first display device D3, a second display device D3S, a storage device D4, a gate lock lever D5, a controller 30, and a shovel support device 50 are installed in the cabin 10.

The controller 30 functions as a main control part for controlling the drive of the shovel 100. In the present embodiment, the controller 30 is composed of an arithmetic processing unit (i.e., arithmetic processing circuitry) including a CPU and an internal memory. Various functions of the controller 30 are achieved by the CPU executing programs stored in the internal memory.

The shovel support device 50 is an example of a construction machine support device, and is configured to support work by the shovel 100. In the present embodiment, the shovel support device 50 is configured to visually and audibly inform the operator of a vertical distance between, for example, a target construction surface and a working part of the bucket 6. The target construction surface is a part of construction data derived from design data. Thus, the shovel support device 50 can guide the operator's operation of the shovel 100.

Specifically, the shovel support device 50 includes an arithmetic processing unit (i.e., arithmetic processing circuitry) including a CPU and an internal memory, and the like, similar to the controller 30. Various functions of the shovel support device 50 are achieved by the CPU executing programs stored in the internal memory. The shovel support device 50 may be integrated with the controller 30.

The input device D1 is a device for the operator of the shovel 100 to input various types of information to the shovel support device 50. In the present embodiment, the input device D1 is a membrane switch mounted around the first display device D3. The input device D1 may be individually installed in association with each of the first display device D3 and the second display device D3S. In this case, the input device D1 may be a touch panel.

The sound output device D2 outputs various types of sound information in response to a sound output command from the shovel support device 50. In the present embodiment, the sound output device D2 is an onboard speaker directly connected to the shovel support device 50. The sound output device D2 may be an alarm such as a buzzer.

The first display device D3 and the second display device D3S output various types of image information in response to commands from the shovel support device 50. In the present embodiment, the first display device D3 and the second display device D3S are onboard liquid crystal displays directly connected to the shovel support device 50. The first display device D3 displays a camera image captured by the camera as the imaging device S6. The second display device D3S may display a camera image. In the present embodiment, the screen size of the second display device D3S is larger than the screen size of the first display device D3. However, the screen size of the second display device D3S may be smaller than the screen size of the first display device D3.

The storage device D4 is a device for storing various types of information. In the present embodiment, a nonvolatile storage medium such as a semiconductor memory is used as the storage device D4. The storage device D4 stores design data and the like. The storage device D4 may store various types of information output from the shovel support device 50 and the like.

The gate lock lever D5 is a mechanism for preventing the shovel 100 from being operated incorrectly. In the present embodiment, the gate lock lever D5 is disposed between a door of the cabin 10 and an operator's seat 10S. When the gate lock lever D5 is pulled up, various operating devices can be operated. Conversely, when the gate lock lever D5 is pushed down, the various operating devices cannot be operated.

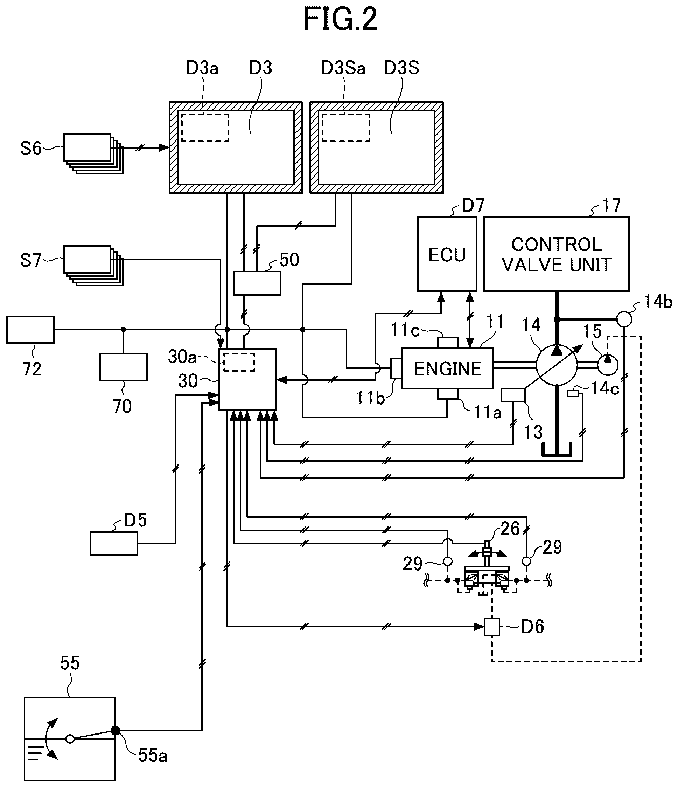

FIG. 2 is a drawing illustrating a configuration example of a drive control system of the shovel 100 of FIG. 1. In FIG. 2, mechanical power transmission systems are indicated by double lines, hydraulic fluid lines by thick solid lines, pilot lines by broken lines, and an electric drive and control systems by thin solid lines.

The engine 11 is the power source of the shovel 100. In the present embodiment, the engine 11 is a diesel engine employing isochronous control to maintain the engine speed constant regardless of increase or decrease of the engine load. A fuel injection amount, fuel injection timing, and boost pressure in the engine 11 are controlled by the engine controller unit (ECU) D7.

The rotary shaft of the engine 11 is connected to the respective rotary shafts of a main pump 14 and the pilot pump 15 as hydraulic pumps. The control valve unit 17 is connected to the main pump 14 via a hydraulic fluid line.

The control valve unit 17 is a hydraulic control device for controlling the hydraulic system of the shovel 100. Hydraulic actuators such as left and right traveling hydraulic motors, the boom cylinder 7, the arm cylinder 8, the bucket cylinder 9, and a swivel hydraulic motor are connected to the control valve unit 17 via a hydraulic fluid line. The swivel hydraulic motor may be a swivel motor generator.

An operating device 26 is connected to the pilot pump 15 via a pilot line. The operating device 26 includes a lever and a pedal. The operating device 26 is connected to the control valve unit 17 via a hydraulic line and a gate lock valve D6.

The gate lock valve D6 switches between communication and interruption of the hydraulic line connecting the control valve unit 17 and the operating device 26. In the present embodiment, the gate lock valve D6 is a solenoid valve that switches between communication and interruption of the hydraulic line in response to a command from the controller 30. The controller 30 determines the state of the gate lock lever D5 based on the state signal output from the gate lock lever D5. Then, the controller 30 outputs a communication command to the gate lock valve D6 when determining that the gate lock lever D5 is in the raised state. When the communication command is received, the gate lock valve D6 opens to communicate the hydraulic line. As a result, the operator's operation of the operating device 26 becomes effective. Conversely, the controller 30 outputs an interruption command to the gate lock valve D6 when determining that the gate lock lever D5 is in the pulled state. When the interruption command is received, the gate lock valve D6 closes to interrupt the hydraulic line. As a result, the operator's operation of the operating device 26 becomes ineffective.

A pressure sensor 29 detects the operation contents of the operating device 26 in the form of pressure. The pressure sensor 29 outputs the detected value to the controller 30.

FIG. 2 shows the connection relation among the controller 30, the first display device D3, and the second display device D3S. In the present embodiment, the first display device D3 and the second display device D3S are connected to the controller 30 via the shovel support device 50. The first display device D3, the second display device D3S, the shovel support device 50, and the controller 30 may be connected via a communication network such as CAN.

The space recognition device S7 detects the presence or absence of an object in the space near the shovel 100, a distance to the object, and the like. The space recognition device S7 outputs the result of measuring the space to the controller 30 as measurement information.

The first display device D3 includes a conversion processing part D3a for generating an image. In the present embodiment, the conversion processing part D3a generates a camera image for display based on the output of the camera as the imaging device S6. The imaging device S6 is connected to the first display device D3 via a leased line, for example.

The conversion processing part D3a generates an image for display based on the output of the controller 30 or the shovel support device 50. In the present embodiment, the conversion processing part D3a converts various types of information output from the controller 30 or the shovel support device 50 into image signals. The information output from the controller 30 includes, for example, data indicating the temperature of engine cooling water, data indicating the temperature of hydraulic fluid, data indicating the residual amount of fuel, data indicating the residual amount of urea water, and the like. The information output from the shovel support device 50 includes data indicating the position of the working part of the bucket 6, data indicating the direction of the slope of the work object, data indicating the direction of the shovel 100, data indicating the operation direction for making the shovel 100 face the slope, and the like.

Like the first display device D3, the second display device D3S includes a conversion processing part D3Sa that generates an image. In the present embodiment, the second display device D3S is not directly connected to the imaging device S6. Therefore, the conversion processing part D3Sa does not generate a camera image. However, the conversion processing part D3Sa may generate a camera image when the second display device D3S is directly connected to the imaging device S6.

The conversion processing part D3Sa generates a display image based on the output of the shovel support device 50. In the present embodiment, the conversion processing part D3Sa converts various information output from the shovel support device 50 into image signals. However, the display image may be generated based on the output of the controller 30.

The conversion processing part D3a may be achieved not as a function of the first display device D3 but as a function of the controller 30 or the shovel support device 50. The same applies to the conversion processing part D3Sa. In this case, the imaging device S6 is connected to the controller 30 or the shovel support device 50, not to the first display device D3.

The first display device D3 and the second display device D3S are operated by receiving electric power from a storage battery 70. The storage battery 70 is charged with electric power generated by the alternator 11a (generator) of the engine 11. The electric power of the storage battery 70 is supplied not only to the controller 30, the first display device D3, and the second display device D3S, but also to electrical components 72 of the shovel 100 and the like. The starter 11b of the engine 11 is driven by electric power from the storage battery 70 to start the engine 11.

The engine 11 is controlled by the engine controller unit D7. The engine controller unit D7 constantly transmits various data indicating the state of the engine 11 to the controller 30. The various data indicating the state of the engine 11 is an example of operation information of the shovel 100 and includes, for example, data indicating the cooling water temperature detected by the water temperature sensor 11c as the operation information acquisition part. The controller 30 stores this data in a temporary storage part (memory) 30a and transmits it to the first display device D3 when necessary.

Various data as operation information of the shovel 100 are supplied to the controller 30 and stored in the temporary storage part 30a of the controller 30 as follows.

For example, data indicating the swash plate tilt angle is supplied to the controller 30 from the regulator 13 of the main pump 14 which is a variable displacement hydraulic pump. Data indicating the discharge pressure of the main pump 14 is supplied to the controller 30 from the discharge pressure sensor 14b. These data are stored in the temporary storage part 30a. An oil temperature sensor 14c is provided in a pipe line between the main pump 14 and the tank in which the hydraulic fluid sucked by the main pump 14 is stored, and data indicating the temperature of the hydraulic fluid flowing through the pipe line is supplied to the controller 30 from the oil temperature sensor 14c. The regulator 13, the discharge pressure sensor 14b, and the oil temperature sensor 14c are examples of the operation information acquisition part.

Data indicating the fuel capacity is supplied to the controller 30 from the fuel capacity detection part 55a in the fuel storage part 55. In the present embodiment, data indicating the fuel level is supplied to the controller 30 from a fuel level sensor, which acts as the fuel capacity detection part 55a in a fuel tank used as the fuel storage part 55.

Specifically, the fuel level sensor is composed of a float that follows the liquid level and a variable resistor (potentiometer) that converts the vertical fluctuation of the float into a resistance value. With this configuration, the fuel level sensor can display the fuel level without steps on the first display device D3. The detection method of the fuel capacity detection part can be appropriately selected in accordance with the operating environment, and a detection method capable of displaying the fuel level with steps may be adopted. This configuration is similar to that of the urea water tank.

The pilot pressure acting on the control valve unit 17 when the operating device 26 is operated is detected by the pressure sensor 29, and data indicating the detected pilot pressure is supplied to the controller 30.

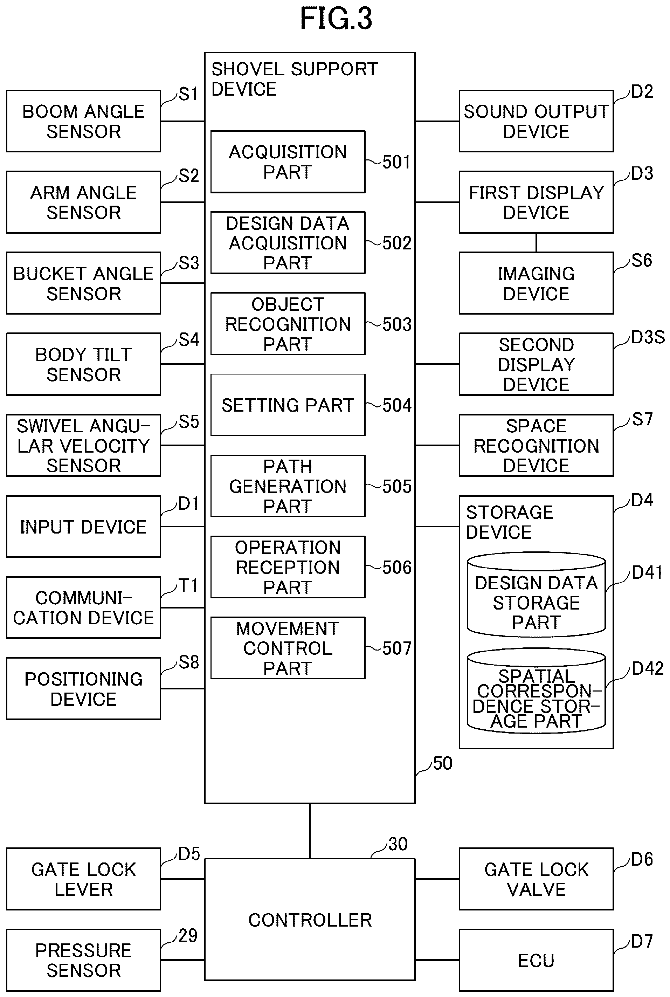

Next, various functional elements of the shovel support device 50 will be described with reference to FIG. 3. FIG. 3 is a functional block diagram illustrating a configuration example of the shovel support device 50.

The shovel support device 50 receives information output from the boom angle sensor S1, the arm angle sensor S2, the bucket angle sensor S3, the body tilt sensor S4, the swivel angular velocity sensor S5, the input device D1, the communication device T1, the positioning device S8, the controller 30, and the like. Then, various operations are executed based on the received information and the information stored in the storage device D4, and the operation results are output to the sound output device D2, the first display device D3, the second display device D3S, and the like.

The storage device D4 stores a design data storage part D41 and a spatial correspondence storage part D42.

The design data storage part D41 stores design data. The design data includes construction data showing a three-dimensional shape after construction by the shovel 100 at the work site. The construction data includes position data of the construction target in the global coordinate system indicated by GNSS and three-dimensional shape data after construction. For example, the design data includes the position data and the three-dimensional shape data of the target construction surface formed after earth is excavated by the shovel 100.

The position data is expressed, for example, in standard coordinates similar to the position data acquired by GNSS. The standard coordinates include, for example, the world geodetic system. The world geodetic system is a three-dimensional orthogonal XYZ coordinate system with the origin at the center of gravity of the earth, the X-axis in the direction of the intersection between the Greenwich meridian and the equator, the Y-axis in the direction of longitude 90 degrees east, and the Z-axis in the direction of the North Pole.

The spatial correspondence storage part D42 stores attributes set to the space based on the detected object. In the present embodiment, the object and the size and attributes of the space set to the object as a reference are stored in association with each other. Specific attributes of the space will be described later.

The shovel support device 50 includes an acquisition part 501, a design data acquisition part 502, an object recognition part 503, a setting part 504, a path generation part 505, an operation reception part 506, and a movement control part 507.

The acquisition part 501 acquires various information from various sensors. For example, the acquisition part 501 acquires image information captured by the imaging device S6 (front camera S6F, left camera S6L, right camera S6R, rear camera S6B, and arm camera S6A). For example, the acquisition part 501 acquires measurement information indicating the result measured by the space recognition device S7 (rear space recognition device S7B, left space recognition device S7L, right space recognition device S7R, front space recognition device S7F, and arm space recognition device S7A).

The acquisition part 501 acquires detection information detected by each of the boom angle sensor S1, arm angle sensor S2, bucket angle sensor S3, body tilt sensor S4, and swivel angular velocity sensor S5. The acquisition part 501 acquires the position and direction of the shovel 100 from the positioning device S8.

The design data acquisition part 502 acquires design data corresponding to the work site where the shovel 100 is working from the storage device D4.

The object recognition part 503 recognizes an object existing near the shovel 100 by combining image information picked up by the imaging device S6 and measurement information measured by the space recognition device S7.

The object recognition part 503 recognizes the distance to the object existing near the shovel 100, the direction and the size of the object based on the result of three-dimensional measurement of the surroundings of the shovel 100 indicated by the measurement information measured by the space recognition device S7.

Furthermore, the object recognition part 503 applies image recognition processing to the image information picked up by the imaging device S6 to recognize the type of the object existing near the shovel 100. The image recognition processing includes, for example, pattern matching processing, processing using machine learning (a trained model such as deep learning), processing using a pattern recognition model such as support vector machine, or processing using SIFT features. The processing using machine learning is a processing to output the area where the object is photographed and the type of the object by inputting image information to the trained model. To generate the trained model, the learning may be performed by back propagation using, for example, a neural network.

Then, the object recognition part 503 can determine the position of the object in the standard coordinates by combining the distance and direction to the object measured by the measurement information with the position and direction of the shovel 100 detected by the positioning device S8.

The object recognition part 503 determines the size of the object recognized in the image based on the measurement information. The size of the predetermined object is determined, for example, by coordinates (latitude, longitude, and altitude) related to the virtual three-dimensional figure surrounding the object. The virtual three-dimensional figure is, for example, a sphere, a rectangular parallelepiped, a cylinder, a square cylinder, a cone, or a square pyramid. The coordinates related to the virtual three-dimensional figure are, for example, coordinates of a vertex or a center point of the virtual three-dimensional figure.

The determined object is an object that the operator of the shovel 100 should pay attention to when performing work by the shovel 100, and is, for example, a molded part which is a part where construction has been completed, a land surface or earth to be constructed, an obstacle (e.g., cone) existing around the shovel 100, and a dump truck for loading earth. The molded part is a slope part where slope shaping work has been completed, a surface part where horizontal pulling work has been completed, or an excavation part where excavation work has been completed.

The determined object includes a person. Thus, when a person exists near the shovel 100, the shovel 100 can be controlled in consideration of the presence of the person.

The captured image used to recognize the object in the present embodiment is not limited to the image information output by the imaging device S6 installed outside the shovel 100, but may be the captured image from the imaging device mounted on a flying object such as a drone existing in the work site. Furthermore, it may be the imaging device mounted on a steel tower or the like in the work site, or it may be the imaging device mounted on another shovel operating in the same work site.

Similarly, the measurement information used to recognize the distance to the object, the direction, and the size of the object in the present embodiment is not limited to the measurement information output by the space recognition device S7 installed outside the shovel 100, but may be the measurement information from the space recognition device mounted on a flying object such as a drone existing in the work site. Furthermore, it may be the space recognition device mounted on a steel tower or the like in the work site, or it may be the space recognition device mounted on another shovel operating in the same work site.

The recognition of the object existing near the shovel 100 by the object recognition part 503 is updated at every predetermined timing.

The setting part 504 refers to the spatial correspondence storage part D42 and determines the size of the space (to be the setting destination of the attribute) based on the detected object. Furthermore, the setting part 504 sets the attribute associated with the detected object to the space according to the correspondence relation shown in the spatial correspondence storage part D42.

The attributes set to the space are a movement prohibited space, a movable space, an excavation target space, an excavation restricted space, an earth falling prevention space, an earth falling permission space, an earth removal permission space, and others (other areas). The present embodiment shows an example of the attribute set to the space, and other attributes may be set to the space.

The movement prohibited space is a space where the movement of the body of the shovel 100 and the attachment of the shovel 100 is prohibited due to the presence of obstacles or people.

The movable space (an example of the second permission attribute) is a space where the movement of the shovel 100 is permitted. There are a plurality of types of movable spaces. For example, at least one of the following is settable by the setting part 504: an attachment movement permission space (an example of an attribute) which indicates that the attachment of the shovel 100 is movable; a travel permission space (an example of an attribute) which indicates that the space on the detected road surface is movable by the lower traveling body 1; and a load movement permission space (an example of an attribute) which indicates that the bucket 6 is movable even when the load is mounted thereon. By making these attributes settable, concrete control in consideration of the situation around the shovel 100 can be achieved.

The movable space described above is set when no object is detected in the space. Note that the movable space is not limited to the attributes set when no object is detected in the space. Moreover, the setting part 504 is not limited to the method of setting any one of the attachment movement permission space (an example of an attribute), travel permission space (an example of an attribute), and load movement permission space for a predetermined space, and a plurality of attributes may be set.

The excavation target space is the space in which earth is detected and is the movement permission space of the bucket 6 (an example of the first permission attribute). For example, when earth is recognized by the object recognition part 503, the space in which the earth exist may be set as the excavation target space (the space in which the bucket 6 can move) based on the detected earth.

The excavation restriction space is a space (attribute indicating a space) in which excavation of earth is restricted. For example, among the spaces in which earth is detected, an excavation restriction space is set for the inside of the target construction surface included in the design data.

The earth falling prevention space is a space (in other words, the attribute indicating the space for restricting the movement of the bucket 6 loaded with earth) in which movement of the bucket 6 is restricted when earth is loaded in the bucket 6. The earth falling prevention space is set for the space above the detected object, for example.

The earth falling permission space is a space (in other words, the attribute indicating the space in which earth is allowed to fall) in which the earth is permitted to move into the space by the work on the earth by the bucket 6.

The present embodiment is not limited to the method of setting each of the earth falling permission space and the earth falling prevention space based on the detected object. For example, the space other than the earth falling permission space may be automatically set as the earth falling prevention space.

The earth removal permission space is a space (an attribute indicating a space permitting releasing a load from the bucket 6) in which earth loaded in the bucket 6 are permitted to be discharged. The earth removal permission space is, for example, a space above a dump truck. When the earth removal permission space is set, the moving destination of the bucket 6 can be specified, so that it is easy to generate a moving path. Therefore, in the present embodiment, since the bucket 6 can be guided to the earth removal permission space along the moving path, the operation load from excavation to soil discharging can be reduced.

Furthermore, when setting attributes to all the spaces surrounding the shovel 100, the setting part 504 may set "others" to the space if an unknown space exists. For example, the setting part 504 may set "others" to the space not to be measured by the space recognition device S7, such as the sky.

The path generation part 505 generates a moving path for the shovel 100 to move based on the attributes set to the space by the setting part 504. The specific moving object may be the lower traveling body 1 of the shovel 100 or the attachment of the shovel 100.

For example, the path generation part 505 generates a moving path so as to pass through a movable space and not through a movement prohibited space. More specifically, when generating a moving path of the bucket 6 for excavation by the shovel 100, the path generation part 505 generates a moving path so as to guide the bucket 6 to the soil discharging permitted space through a movable space without passing through the movement prohibited space and the earth falling prevention space after moving the bucket 6 to the excavation object space. Further, when generating the moving path, the path generation part 505 generates the moving path considering not only the position of the bucket 6 but also the posture and shape of the whole attachment of the shovel 100. More specifically, the path generation part 505 generates the moving path considering the space through which each of the attachments passes. For example, the path generation part 505 generates the moving path so that not only the bucket 6 but also the boom 4 and the arm 5 do not pass through the movement prohibited space. Thus, the possibility that a part of the attachment of the shovel 100 contacts an obstacle can be reduced. As another example, when earth is loaded in the bucket **6,** the path generation part 505 may generate the moving path so that the boom 4 and the arm 5 may pass through the movement prohibited space while preventing the bucket 6 from passing through the movement prohibited space. For example, the path generation part 505 may determine whether the upper swivel body 3 swivels right or left so as not to pass through the movement prohibited space.

The present embodiment is not limited to the generation of the moving path of the bucket 6, but may generate the moving path of the lower traveling body 1 of the shovel 100. For example, in order to move to a target position according to the work process shown in the design data, the path generation part 505 may generate a moving path that travels in a moving permission space (travel permission space) in which the movement of the lower traveling body 1 is permitted.

The operation reception part 506 receives the operation contents of the operating device 26 from the pressure sensor 29.

The movement control part 507 controls the shovel 100 to move along the moving path generated by the path generation part 505 according to the operation contents received by the operation reception part 506. The control object may be the bucket 6 or the lower traveling body 1. In the present embodiment, the movement control part 507 controls movement along the moving path by the operator performing an operation such as tilting the lever of the operating device 26. Operation support by the movement control along the moving path by the movement control part 507 can reduce the operation burden of the operator.

As described above, the shovel support device 50 according to the present embodiment sets attributes to the space around the shovel 100 based on the outputs from the space recognition device S7 and the imaging device S6, and controls the shovel 100 based on the attributes set to the space.

The shovel support device 50 according to the present embodiment performs semi-automatic control of the shovel 100 according to the operation of the operator. For example, when excavation work is performed, when the operation reception part 506 receives an operation to open the arm from the operator, the movement control part 507 performs hydraulic drive control of the bucket 6, the arm 5, and the boom 4 so that the bucket 6 moves along the moving path generated by the path generation part 505.

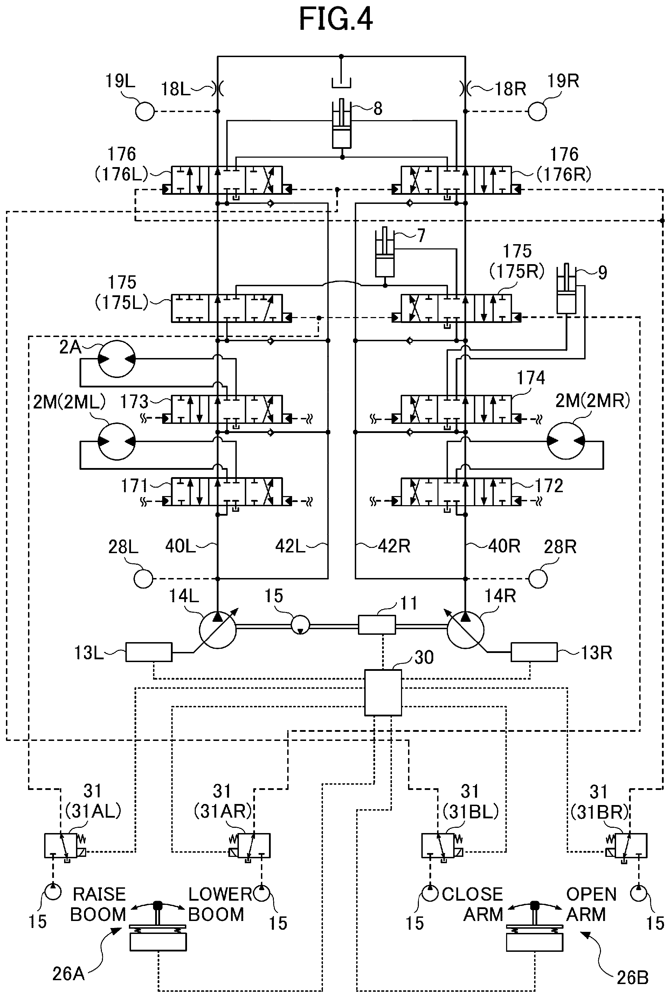

Next, an example configuration of the hydraulic system mounted on the shovel 100 will be described with reference to FIG. 4. FIG. 4 is a drawing illustrating a configuration example of a hydraulic system mounted on a shovel 100 of FIG. 1. FIG. 4 shows mechanical power transmission lines, hydraulic fluid lines, pilot lines, and electric control lines by double lines, solid lines, broken lines, and dotted lines, respectively.

The hydraulic system circulates hydraulic fluid from the left main pump 14L driven by the engine 11 to the hydraulic fluid tank via the left center bypass line 40L or the left parallel line 42L, and circulates hydraulic fluid from the right main pump 14R driven by the engine 11 to the hydraulic fluid tank via the right center bypass line 40R or the right parallel line 42R.

The left center bypass line 40L is a hydraulic fluid line passing through control valves 171, 173, 175L and 176L arranged in the control valve unit 17. The right center bypass line 40R is a hydraulic fluid line passing through control valves **172, 174,** 175R and 176R arranged in the control valve unit 17.

The control valve 171 is a spool valve for switching the flow of hydraulic fluid so that the hydraulic fluid discharged from the left main pump 14L is supplied to the left traveling hydraulic motor 1L and the hydraulic fluid discharged from the left traveling hydraulic motor 1L is discharged to the hydraulic fluid **tank.**

The control valve 172 is a spool valve for switching the flow of hydraulic fluid so that the hydraulic fluid discharged from the right main pump 14R is supplied to the right traveling hydraulic motor 1R and the hydraulic fluid discharged from the right traveling hydraulic motor 1R is discharged to the hydraulic fluid **tank.**

The control valve 173 is a spool valve for switching the flow of hydraulic fluid so that the hydraulic fluid discharged from the left main pump 14L is supplied to the swivel hydraulic motor 2A and the hydraulic fluid discharged from the swivel hydraulic motor 2A is discharged to the hydraulic fluid **tank.**

The control valve 174 is a spool valve that supplies the hydraulic fluid discharged from the right main pump 14R to the bucket cylinder 9 and switches the flow of the hydraulic fluid to discharge the hydraulic fluid in the bucket cylinder 9 to the hydraulic fluid **tank.**

The control valve 175L is a spool valve that switches the flow of the hydraulic fluid to supply the hydraulic fluid discharged from the left main pump 14L to the boom cylinder 7.

The control valve 175R is a spool valve that switches the flow of the hydraulic fluid to supply the hydraulic fluid discharged from the right main pump 14R to the boom cylinder 7 and to discharge the hydraulic fluid in the boom cylinder 7 to the hydraulic fluid tank.

The control valve 176L is a spool valve that switches the flow of the hydraulic fluid to supply the hydraulic fluid discharged from the left main pump 14L to the arm cylinder 8 and to discharge the hydraulic fluid in the arm cylinder 8 to the hydraulic fluid tank.

The control valve 176R is a spool valve that switches the flow of the hydraulic fluid to supply the hydraulic fluid discharged from the right main pump 14R to the arm cylinder 8 and to discharge the hydraulic fluid in the arm cylinder 8 to the hydraulic fluid tank.

The left parallel line 42L is a hydraulic fluid line parallel to the left center bypass line 40L. The left parallel line 42L can supply hydraulic fluid to the downstream control valve when the flow of hydraulic fluid passing through the left center bypass line 40L is restricted or cut off by any of the control valves 171, 173, and 175L. The right parallel line 42R is a hydraulic fluid line parallel to the right center bypass line 40R. The right parallel line 42R can supply hydraulic fluid to the downstream control valve when the flow of hydraulic fluid passing through the right center bypass line 40R is restricted or cut off by any of the control valves 172, 174, and 175R.

The left regulator 13L is configured to control the discharge amount of the left main pump 14L. In the present embodiment, the left regulator 13L controls the discharge amount of the left main pump 14L by, for example, adjusting the swash plate tilt angle of the left main pump 14L according to the discharge pressure of the left main pump 14L. The right regulator 13R is configured to control the discharge amount of the right main pump 14R. In the present embodiment, the right regulator 13R controls the discharge amount of the right main pump 14R by, for example, adjusting the swash plate tilt angle of the right main pump 14R according to the discharge pressure of the right main pump 14R. The left regulator 13L, for example, adjusts the swash plate tilt angle of the left main pump 14L according to an increase in the discharge pressure of the left main pump 14L to decrease the discharge amount. The same applies to the right regulator 13R. This is so that the pump absorption horsepower expressed as the product of the discharge pressure and the discharge amount does not exceed the output horsepower of the engine 11. The pump absorption horsepower is the sum of the absorption horsepower of the left main pump 14L and the absorption horsepower of the right main pump 14R.

The left discharge pressure sensor 28L is an example of the discharge pressure sensor 28, and detects the discharge pressure of the left main pump 14L and outputs the detected value to the controller 30. The same applies to the right discharge pressure sensor 28R.

The negative control adopted in the hydraulic system shown in FIG. 4 will now be described.

In the left center bypass line 40L, a left throttle 18L is arranged between the control valve 176L located in the most downstream and the hydraulic fluid tank. The flow of hydraulic fluid discharged by the left main pump 14L is limited by the left throttle 18L. The left throttle 18L generates control pressure for controlling the left regulator 13L. The left control pressure sensor 19L is a sensor for detecting control pressure and outputs the detected value to the controller 30. In the right center bypass line 40R, a right throttle 18R is arranged between the control valve 176R located at the most downstream and the hydraulic fluid tank. The flow of hydraulic fluid discharged from the right main pump 14R is limited by the right throttle 18R. The right throttle 18R generates control pressure for controlling the right regulator 13R. The right control pressure sensor 19R is a sensor for detecting the control pressure and outputs the detected value to the controller 30.

The controller 30 controls the discharge amount of the left main pump 14L by adjusting the swash plate tilt angle of the left main pump 14L according to the control pressure. The controller 30 decreases the discharge amount of the left main pump 14L as the control pressure increases, and increases the discharge amount of the left main pump 14L as the control pressure decreases. The discharge amount of the right main pump 14R is similarly controlled.

Specifically, as shown in FIG. 4, when the hydraulic actuator of the shovel 100 is in a standby state where none of the hydraulic actuators are operated, the hydraulic fluid discharged from the left main pump 14L passes through the left center bypass line 40L and reaches the left throttle 18L. The flow of the hydraulic fluid discharged from the left main pump 14L increases the control pressure generated upstream of the left throttle 18L. As a result, the controller 30 reduces the discharge amount of the left main pump 14L to the allowable minimum discharge amount and reduces the pressure loss (pumping loss) when the discharged hydraulic fluid passes through the left center bypass line 40L. Conversely, when any hydraulic actuator is operated, the hydraulic fluid discharged from the left main pump 14L flows into the hydraulic actuator to be operated via the control valve corresponding to the hydraulic actuator to be operated. The flow of the hydraulic fluid discharged from the left main pump 14L decreases or disappears the amount reaching the left throttle 18L and reduces the control pressure generated upstream of the left throttle 18L. As a result, the controller 30 increases the discharge amount of the left main pump 14L, circulates sufficient hydraulic fluid to the hydraulic actuator to be operated, and ensures the drive of the hydraulic actuator to be operated. The same applies to the hydraulic fluid discharged from the right main pump 14R.

With the above-described configuration, the hydraulic system of FIG. 4 can reduce wasteful energy consumption in each of the left main pump 14L and the right main pump 14R in the standby state. The wasteful energy consumption includes pumping loss generated in the left center bypass line 40L by the hydraulic fluid discharged from the left main pump 14L and pumping loss generated in the right center bypass line 40R by the hydraulic fluid discharged from the right main pump 14R. When the hydraulic actuator is operated, the hydraulic system of FIG. 4 can supply necessary and sufficient hydraulic fluid from each of the left main pump 14L and the right main pump 14R to the hydraulic actuator to be operated.

Next, a configuration for automatically operating the actuator will be described. The boom operation lever 26A is an example of an electric operation lever as the operating device 26 and is used to operate the boom **4.** The boom operation lever 26A detects the operation direction and the manipulated variable, and outputs the detected operation direction and a manipulated variable to the controller 30 as operation data (electric signal). When the boom operation lever 26A is operated in the boom raising direction during manual control, the controller 30 controls the opening of the proportional valve 31AL according to the manipulated variable of the boom operation lever 26A. Thus, the pilot pressure corresponding to the manipulated variable of the boom operation lever 26A is applied to the right pilot port of the control valve 175L and the left pilot port of the control valve 175R using the hydraulic fluid discharged from the pilot pump 15. When the boom operation lever 26A is operated in the boom lowering direction during manual control, the controller 30 controls the opening of the proportional valve 31AR according to the operating amount of the boom operation lever 26A. Thus, the pilot pressure corresponding to the operating amount of the boom operation lever 26A is applied to the right pilot port of the control valve 175R by using the hydraulic fluid discharged from the pilot pump 15.

The proportional valves 31AL and 31AR constitute the boom proportional valve 31 A which is an example of the proportional valve 31 as a solenoid valve. The proportional valve 31AL operates according to the current command adjusted by the controller 30. The controller 30 adjusts the pilot pressure by the hydraulic fluid introduced from the pilot pump 15 to the right pilot port of the control valve 175L and the left pilot port of the control valve 175R via the proportional valve 31AL. The proportional valve 31AR operates according to the current command adjusted by the controller 30. The controller 30 adjusts the pilot pressure by the hydraulic fluid introduced from the pilot pump 15 to the right pilot port of the control valve 175R via the proportional valve 31AR. The proportional valves 31AL and 31AR can adjust the pilot pressure so that the control valves 175L and 175R can stop at any valve position.

With this configuration, the controller 30 can supply hydraulic fluid discharged from the pilot pump 15 to the right pilot port of the control valve 175L and the left pilot port of the control valve 175R via the proportional valve 31AL during automatic excavation control, regardless of the boom raising operation by the operator. That is, the controller 30 can automatically raise the boom 4. Moreover, the controller 30 can supply hydraulic fluid discharged from the pilot pump 15 to the right pilot port of the control valve 175R via the proportional valve 31AR, regardless of the boom lowering operation by the operator. That is, the controller 30 can automatically lower the boom 4.

The arm operation lever 26B is another example of an electric operation lever as the operating device 26 and is used to operate the arm 5. The arm operation lever 26B detects the operating direction and the operating amount, and outputs the detected operating direction and the operating amount to the controller 30 as operating data (electric signal). When the arm operation lever 26B is operated in the arm opening direction during manual control, the controller 30 controls the opening of the proportional valve 31BR according to the operating amount of the arm operation lever 26B. Thus, the pilot pressure corresponding to the operating amount of the arm operation lever 26B is applied to the left pilot port of the control valve 176L and the right pilot port of the control valve 176R using the hydraulic fluid discharged from the pilot pump 15. When the arm operation lever 26B is operated in the arm closing direction during manual control, the controller 30 controls the opening of the proportional valve 31BL according to the operating amount of the arm operation lever 26B. Thus, the pilot pressure corresponding to the operating amount of the arm operation lever 26B is applied to the right pilot port of the control valve 176L and the left pilot port of the control valve 176R by utilizing the hydraulic fluid discharged from the pilot pump 15.

The proportional valves 31BL and 31BR are included in an arm proportional valve 31B which is an example of the proportional valve 31. The proportional valve 31BL operates according to the current command adjusted by the controller 30. The controller 30 adjusts the pilot pressure due to the hydraulic fluid introduced from the pilot pump 15 to the right pilot port of the control valve 176L and the left pilot port of the control valve 176R via the proportional valve 31BL. The proportional valve 31BR operates according to the current command adjusted by the controller 30. The controller 30 adjusts the pilot pressure due to the hydraulic fluid introduced from the pilot pump 15 to the left pilot port of the control valve 176L and the right pilot port of the control valve 176R via the proportional valve 31BR. The proportional valves 31BL and 31BR can adjust the pilot pressure so that the control valves 176L and 176R can be stopped at any valve position.

With this configuration, the controller 30 can supply the hydraulic fluid discharged from the pilot pump 15 to the right pilot port of the control valve 176L and the left pilot port of the control valve 176R via the proportional valve 31BL regardless of the arm closing operation by the operator. That is, the controller 30 can automatically close the arm 5. In addition, the controller 30 can supply hydraulic fluid discharged from the pilot pump 15 to the left pilot port of the control valve 176L and the right pilot port of the control valve 176R via the proportional valve 31BR regardless of the arm opening operation by the operator. That is, the controller 30 can automatically open the arm 5.

Thus, in the automatic excavation control, the speed control or the position control of the work part is executed by automatically operating the arm cylinder 8 and the boom cylinder 7 according to the operating amount of the arm operation lever 26B. Although the position control of the arm 5 and the boom 4 has been described in the above-described embodiment, the control object is not limited to the arm 5 and the boom **4,** and the position control of the bucket 6 and the lower traveling body 1 can be executed by using the same technology. Thus, in the present embodiment, the automatic control can be performed so that the bucket 6 and the like move along the moving path generated by the path generation part 505 according to the operating amount of the arm operation lever 26B.

The shovel 100 may have a configuration for automatically swiveling the upper swivel body 3 left and right, a configuration for automatically opening and closing the bucket 6, and a configuration for automatically moving the lower traveling body 1 forward and backward. In this case, the hydraulic system portion related to the swivel hydraulic motor 2A, the hydraulic system portion related to the operation of the bucket cylinder 9, the hydraulic system portion related to the operation of the left traveling hydraulic motor 1L, and the hydraulic system portion related to the operation of the right traveling hydraulic motor 1R may have the same configuration as the hydraulic system portion related to the operation of the boom cylinder 7.

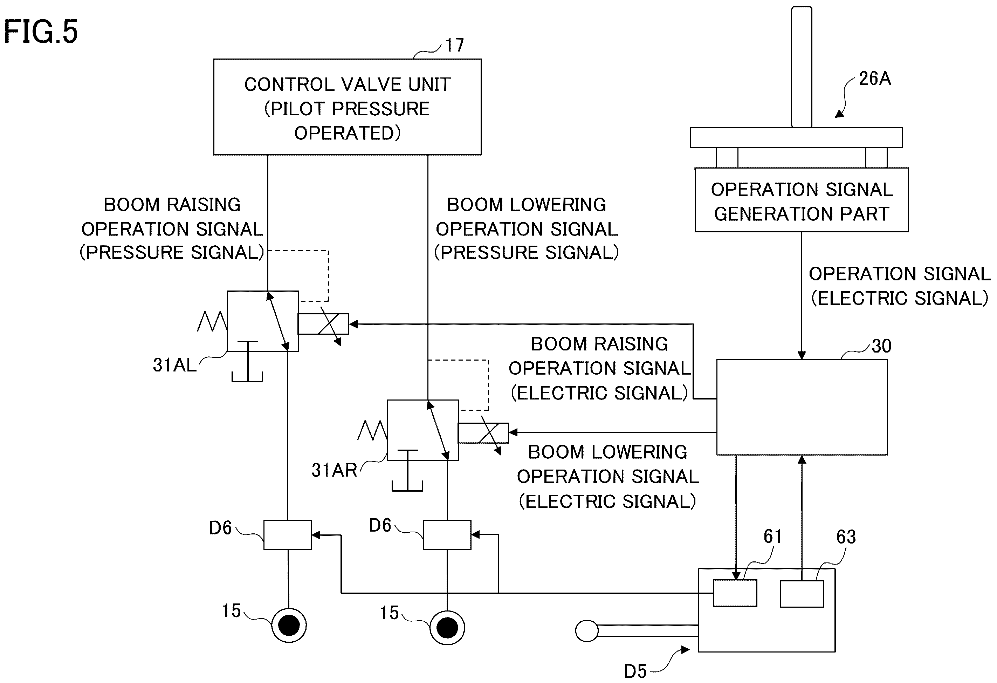

Next, an electric operation system of the shovel 100 according to the present embodiment will be described with reference to FIG. 5. FIG. 5 is a schematic diagram illustrating a configuration example of the electric operation system of the shovel 100 according to the present embodiment. In FIG. 5, as an example of the electric operation system, a boom operation system for raising and lowering the boom 4 will be described. The electric operation system can similarly be applied to a traveling operation system for moving forward or backward the lower traveling body 1, a swivel operation system for swiveling the upper swivel body 3, an arm operation system for opening and closing the arm 5, and a bucket operation system for opening and closing the bucket 6.

The electric operation system shown in FIG. 5 includes a boom operation lever 26A as an electric operation lever, a pilot pump 15, a pilot pressure operated control valve unit 17, a proportional valve 31AL for boom raising operation, a proportional valve 31AR for boom lowering operation, a controller 30, a gate lock lever D5, and a gate lock valve D6.

The boom operation lever 26A (operation signal generation part) as an example of the operation device is provided with a sensor such as an encoder or a potentiometer capable of detecting the manipulated variable (tilt) and tilt direction. The operation signal (electric signal) corresponding to the operation of the boom operation lever 26A detected by the sensor of the boom operation lever 26A is received into the controller 30.

The proportional valve 31AL is provided in a pilot line that supplies hydraulic fluid from the pilot pump 15 to the boom raising pilot port of the control valve unit 17 (see control valves 175L and 175R shown in FIG. 4). The proportional valve 31AL is an adjustable opening solenoid valve, and the opening of the proportional valve 31AL is controlled in accordance with the boom raising operation signal (electric signal) that is a control signal from the controller 30. By controlling the opening of the proportional valve 31AL, the pilot pressure as a boom raising operation signal (pressure signal) acting on the boom raising pilot port is controlled. Similarly, the proportional valve 31AR is provided in a pilot line that supplies hydraulic fluid from the pilot pump 15 to the boom lowering pilot port of the control valve unit 17 (see control valves 175L and 175R shown in FIG. 4). The proportional valve 31AR is an adjustable opening solenoid valve, and the opening of the proportional valve 31AR is controlled in accordance with the boom lowering operation signal (electric signal) acting on the control signal from the controller 30. By controlling the opening of the proportional valve 31AR, the pilot pressure as a boom lowering operation signal (pressure signal) acting on the boom lowering pilot port is controlled.

The controller 30 outputs a boom raising operation signal (electric signal) and a boom lowering operation signal (electric signal) for controlling the opening of the proportional valves 31AL and 31AR. Thus, the controller 30 can control the operation of the boom 4 by controlling the flow rate and direction of the hydraulic fluid supplied to the boom cylinder 7 from the left main pump 14L and the right main pump 14R via the proportional valves 31AL and 31AR and the control valve unit 17 (control valves 175L, 175R).

For example, when manual operation of the shovel 100 is performed, the controller 30 generates and outputs a boom raising operation signal (electric signal) or a boom lowering operation signal (electric signal) according to an operation signal (electric signal) of the boom operation lever 26A. When automatic control of the shovel 100 is performed, for example, the controller 30 generates and outputs a boom raising operation signal (electric signal) or a boom lowering operation signal (electric signal) based on a set program or the like.

The gate lock lever D5 is provided near the platform inside the cabin 10. The gate lock lever D5 is provided to be pivotable. The operator puts the gate lock valve D6 in a release state by pulling up the gate lock lever D5 and making it almost level, and puts the gate lock valve D6 in a lock state by pushing down the gate lock lever D5. In the state where the gate lock lever D5 is pulled up, the gate lock lever D5 blocks the platform of the cabin 10 and regulates the operator from leaving the cabin 10. Conversely, in the state where the gate lock lever D5 is pushed down, the gate lock lever D5 opens the platform of the cabin 10 and permits the operator from leaving the cabin 10.

The limit switch 61 is a switch that turns ON (energized) when the gate lock lever D5 is pulled up and turns OFF (de-energized) when the gate lock lever D5 is pushed down.

The gate lock valve D6 is an on-off valve provided in the pilot line between the pilot pump 15 and the proportional valve 31(31AL, 31AR). The gate lock valve D6 is, for example, a solenoid valve that opens when energized and closes when de-energized. A limit switch 61 is arranged in the power supply circuit of the gate lock valve D6. Thus, when the limit switch 61 is ON, the gate lock valve D6 is opened. When the limit switch 61 is OFF, the gate lock valve D6 is closed. That is, when the limit switch 61 is ON, the gate lock valve D6 is opened and released, and the boom 4 is operable via the boom operation lever 26A. Conversely, when the limit switch 61 is OFF, the gate lock valve D6 is closed and locked, and the boom 4 is inoperable via the boom operation lever 26A.

The lock state detection sensor 63 detects whether the gate lock valve D6 is in the released state or the locked state. For example, the lock state detection sensor 63 is a voltage sensor (or current sensor) provided in an electrical circuit connecting the gate lock valve D6 and the limit switch 61, and detects the released state/locked state of the gate lock valve D6 by detecting the ON/OFF state of the limit switch 61. The detection result is output to the controller 30. The lock state detection sensor 63 may be configured to detect the released state/locked state of the gate lock valve D6 by directly detecting the position of the lever.

Even when the gate lock lever D5 is pulled up, the controller 30 may be configured to switch the limit switch 61 to OFF, close the gate lock valve D6, and prevent the boom 4 from being operated.

FIG. 5 shows a configuration for switching the boom 4 (boom cylinder 7) between operable and inoperable states by the gate lock lever D5. However, the gate lock lever D5 may be configured to simultaneously switch between the operable state and the inoperable state, such as the arm 5 (arm cylinder 8), the bucket 6 (bucket cylinder 9), the swivel hydraulic motor 2A, and the traveling hydraulic motor 2M. However, the gate lock lever D5 may be configured to individually switch between operable and the inoperable states, such as the arm 5 (arm cylinder 8), the bucket 6 (bucket cylinder 9), the swivel hydraulic motor 2A, and the traveling hydraulic motor 2M.

Next, a method in which the setting part 504 sets an attribute to a space based on a detected object by using information stored in the spatial correspondence storage part D42 will be described.

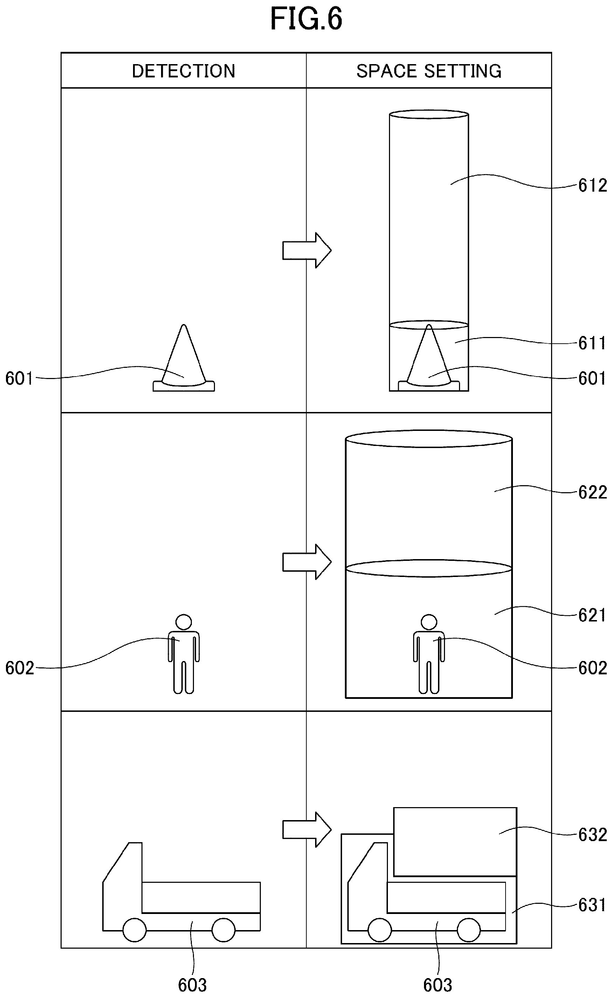

FIG. 6 is a drawing illustrating a correspondence between a detected object and a space divided based on the object (an example of a divided space). FIG. 6 is an example, and various attributes are set according to the detected object.

In the first example shown in FIG. 6, it is assumed that the object recognition part 503 recognizes an obstacle (e.g., a cone) 601. In the spatial correspondence storage part D42, the size of the space to which the attribute is set is determined according to the size of the obstacle 601. For example, in the spatial correspondence storage part D42, the size of the cylindrical space 611 is determined so as to include the obstacle 601, the size of the upper space 612 of the space 611 is determined, and the space 611 and the upper space 612 are determined as the destination of the attribute. The size of the space to which the attribute is set is shown as an example and is determined according to the embodiment of the shovel 100. For example, when determining the size of the space, a margin may be considered for the size of an obstacle.

The spatial correspondence storage part D42 stores attributes to be set for the space. Accordingly, the setting part 504 sets a movement prohibited space (an example of an attribute for restricting the movement of the shovel 100) for the space 611, and sets an earth falling prevention space (an example of an attribute) for the upper space 612. Thus, it is possible to prevent the shovel 100 from coming into contact with the obstacle and to prevent earth from falling on the obstacle (e.g., a cone) 601.

Further, the setting part 504 may set a plurality of attributes for the space related to one recognized object. For example, the object recognition part 503 may set a movable space for the first space within a predetermined distance (1.5 m) from the center of the recognized obstacle 601 but outside the space 611, and also set an earth falling prevention space for the first space. Furthermore, the setting part 504 may set a movable space for the second space located at a predetermined distance (1.5 m) or more from the recognized obstacle 601, and also set an earth falling permission space for the second space.

In the second example shown in FIG. 6, the object recognition part 503 recognizes a person 602. In the spatial correspondence storage part D42, the size of the space to which the attribute is set is determined according to the size of the person 602. When the person is recognized, the spatial correspondence storage part D42 determines the size of the space 621 obtained by adding a predetermined margin (e.g., 1.5 m horizontally) based on the person and the size of the upper space 622 of the space 621. Furthermore, the spatial correspondence storage part D42 determines the space 621 and the upper space 622 as the destination of the attribute.

Then, the setting part 504 sets the movement prohibited space (an example of an attribute) for the space 621 and sets the earth falling prevention space (an example of an attribute indicating that the movement of the attachment load is restricted) for the upper space 622. Thus, it is possible to prevent the shovel 100 from approaching the person 602, and prevent the earth from falling on the person 602. Since the shovel 100 is prevented from approaching the person 602, it is possible to prevent the contact of the person 602 with the shovel 100 even when the person 602 is moving.

In the third example shown in FIG. 6, it is assumed that the object recognition part 503 recognizes the dump truck 603. In the spatial correspondence storage part D42, the size of the space to be the setting destination of the attribute is determined according to the size of the dump truck 603. When the dump truck 603 is recognized, the size of the space 631 corresponding to the dump truck 603 and the size of the upper space 632 of the loading bed of the dump truck 603 are determined in the spatial correspondence storage part D42. The size of the upper space 632 may be set based on, for example, the size of the loading bed of the dump truck 603.

Then, the setting part 504 sets a movement prohibited space (an example of an attribute) for the space 631 and sets an earth removal permission space (an example of an attribute) for the upper space 632. Thus, it is possible to prevent the shovel 100 from coming into contact with the dump truck 603 and to remove earth to the loading bed of the dump truck 603. Further, as described above, the setting part 504 may set a plurality of attributes for an optional space. For example, the object recognition part 503 may set an earth removal permission space and a movable space for the space 632.

In the example shown in FIG. 6, an example of setting attributes for a space based on a recognized object has been described. However, in the present embodiment, the conditions for setting attributes to the space are not limited to recognized objects. Next, an example of setting attributes to the space will be described in consideration of construction data included in design data.

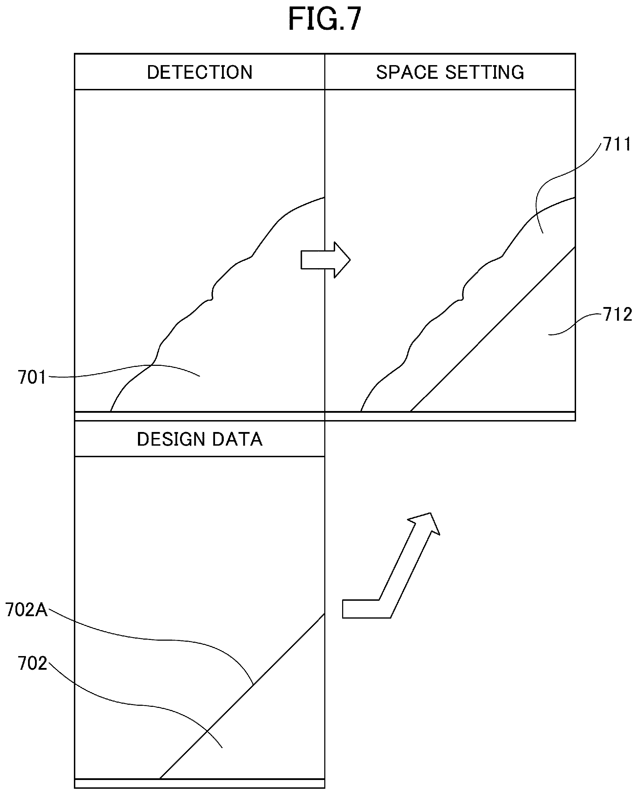

FIG. 7 is a drawing illustrating a correspondence among a detected object, construction data illustrating a three-dimensional shape after construction, and a space divided based on the construction data and the object. FIG. 7 is an example, and various attributes are set according to the detected object.

In the first example shown in FIG. 7, the object recognition part 503 recognizes the earth 701. Furthermore, the construction data (information concerning construction of the space) contained in the design data stored in the design data storage part D41 shows the three-dimensional shape 702 of the earth after construction and the target construction surface 702A.

Since the detected position of the earth 701 and the position of the three-dimensional shape 702 of the earth use a standard coordinates, the setting part 504 can recognize the relation between the position of the earth 701 and the position where the target construction surface 702A is formed.

The setting part 504 specifies the size of the space 712 (space where the movement of the bucket 6, etc., is restricted) inside the target construction surface 702A and the size of the space 711 outside the target construction surface 702A, based on the shape of the detected earth and construction data (information concerning construction of the space).

Then, the setting part 504 sets the excavation restriction space (attribute for restricting movement of the work machine) for the space 712, and sets the excavation target space (example of an attribute indicating that the attachment is movable) for the space 711.

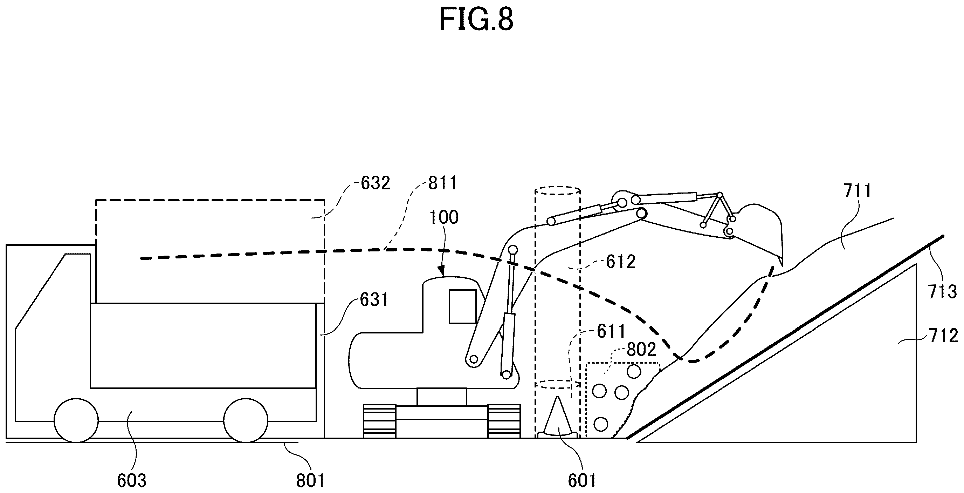

FIG. 8 is a drawing illustrating a first example of a space set based on an object existing near the shovel 100 by the setting part 504 according to the present embodiment. FIG. 8 shows an example in which the shovel 100 carries out excavation work and loads the earth of the dump truck 603.

In the example shown in the FIG. 8, the setting part 504, based on construction data, image information, and measurement information, sets the excavation target space 711 towards the shovel 100 and the excavation restriction space 712 in the direction opposite to the shovel 100, relative to the target construction surface 713.

Further, the setting part 504 sets a space adjacent to the excavation target space 711 and free of obstacles as the earth falling permission space 802. The earth falling permission space 802 which may spill earth is not limited to the above-described setting, and may be set manually by the site manager or the operator of the shovel 100 according to the situation of the work site. By setting the earth falling permission space 802, the path generation part 505 can generate a moving path when excavating in the bucket 6. Further, the setting part 504 may set a movable space in addition to the earth falling permission space 802 for the space adjacent to the excavation target space 711 and free of obstacles.

The dump truck 603 exists on the dump road 801. The setting part 504 sets the movement prohibited space 631 based on the dump truck 603 and sets the earth removal permission space 632 above the movement prohibited space 631.

Furthermore, the setting part 504 sets the movement prohibited space 611 based on the obstacles 601 and sets the earth falling prevention space 612 above the movement prohibited space 611.

The path generation part 505 generates the moving path 811 of the bucket 6 based on the attributes of the space described above. The path generation part 505 may generate the moving path considering the earth falling permission space 802. For example, when excavating using the bucket 6, the path generation part 505 may generate the moving path of the bucket 6 so that the earth which is not loaded in the bucket 6 but is moved (falling) by excavation moves to the earth falling permission space 802 (example of an adjacent space). Furthermore, the path generation part 505 may generate the moving path of the bucket 6 so that the earth loaded in the bucket 6 moves to the earth removal permission space 632 and then is discharged.

The moving path 811 shows the path of the bucket 6 until the earth in the bucket 6 are loaded in the dump truck 603 after the earth is excavated in the excavation target space 711. The moving path 811 is a path generated so that the earth does not move to the movement prohibited spaces 611 and 631 and the bucket 6 does not move to the earth falling prevention space 612. Furthermore, the moving path 811 is a path generated so that the earth may spill into the earth falling permission space 802 when the earth is excavated in the excavation target space 711.

Then, the movement control part 507 of the shovel support device 50 controls the boom 4, the arm 5, the bucket 6, and the upper swivel body 3 so that the bucket 6 moves along the moving path 811 when the operator is operating to excavate. Thus, the shovel 100 can perform the work from the excavation of the earth to the loading on the dump truck 603.

Conventionally, when actual work is performed, in order to form the target construction surface 713, the shovel may perform an operation to push away the earth existing above the target construction surface 713. Therefore, in the present embodiment, a moving path to push away the earth may be generated.

For example, the path generation part 505 generates a moving path of the bucket 6 to move along the target construction surface 713 which is the surface of the excavation restriction space 712. When the bucket 6 moves along the target construction surface 713 and pushes away the earth, the path generation part 505 generates a moving path such that the earth moved by the pushing away moves to the earth falling permission space 802. Since the formation of the moving path facilitates the formation of the target construction surface 713, the work load can be reduced.

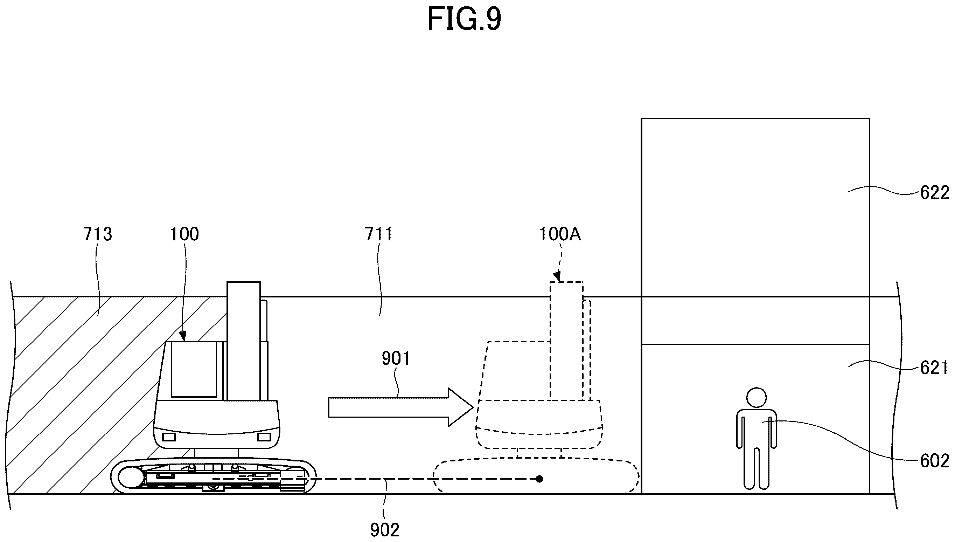

FIG. 9 is a drawing illustrating a second example of a space set based on an object existing near the shovel 100 by the setting part 504 according to the present embodiment. FIG. 9 is an example of moving the shovel 100 when the shovel 100 is performing excavation work.

In the example shown in FIG. 9, the area where excavation is completed and the target construction surface 713 appears and the excavation target space 711 are shown. Furthermore, the movement prohibited space 621 and the earth falling prevention space 612 are set with reference to the person 602.

When the shovel 100 performs excavation work in the excavation target space 711, it is necessary to move in the arrow direction 901. To move along the arrow direction 901, the path generation part 505 generates a moving path 902 up to the front of the movement prohibited space 621. The shovel 100 stops at the position indicated by the shovel 100A when moving along the moving path 902. The safety of the person 602 can be improved by restricting the movement of the shovel 100 to the movement prohibited space 621.

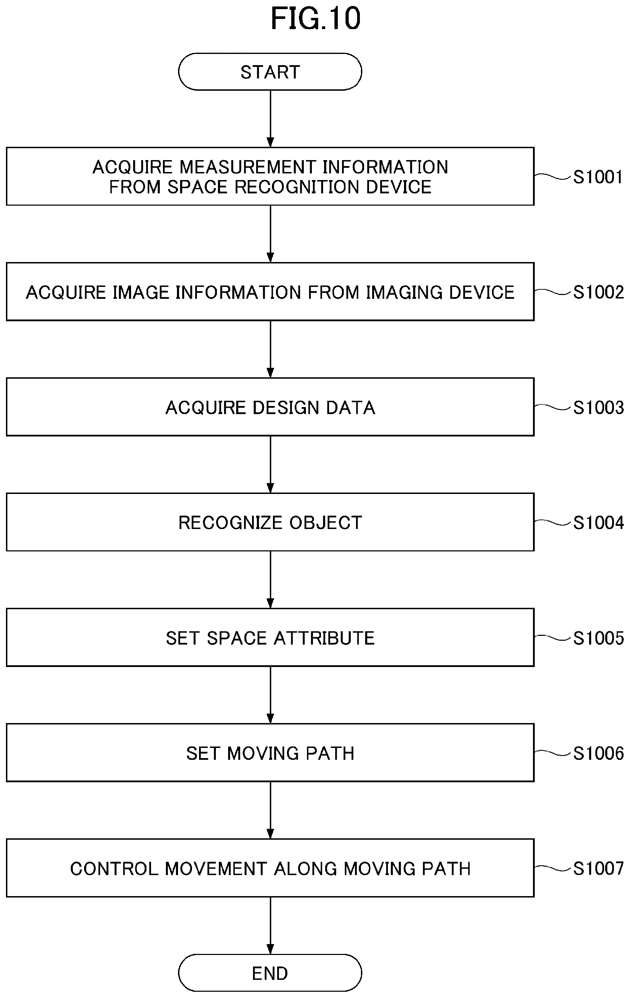

Next, the processing performed by the shovel support device 50 according to the present embodiment will be described. FIG. 10 is a flowchart illustrating processing performed by the shovel support device 50.

As shown in FIG. 10, the acquisition part 501 acquires measurement information from the space recognition device S7 (S1001).

Next, the acquisition part 501 acquires image information captured by the imaging device S6 (S1002).

Furthermore, the design data acquisition part 502 acquires design data from the design data storage part D41 (S1003).

Then, the object recognition part 503 recognizes an object existing around the shovel 100 from the measurement information and the image information (S1004). Specifically, the object recognition part 503 recognizes the type, size, and position of an object for each object.

Then, the setting part 504 divides the space based on the size and type of the detected object, and sets the space attributes based on the detected object type for each divided space (example of the divided space) (S1005). Furthermore, the setting part 504 divides the space based on the three-dimensional shape after construction indicated by construction data, and sets the attribute for each divided space.

The path generation part 505 generates the moving path of the lower traveling body 1 or the bucket 6 based on the attribute set for each divided space (S1006).

Then, the movement control part 507 controls one or more of the boom 4, arm 5, bucket 6, and lower traveling body 1 to move along the moving path based on the operation contents received by the pressure sensor 29 (S1007).

In the present embodiment, since the bucket 6 or the lower traveling body 1 moves along the moving path by performing the control described above, the operation burden of the operator can be reduced. While the lower traveling body 1 or bucket 6 is moving along the moving path, measurement information from the space recognition device S7 and image information from the imaging device S6 may be acquired. Then, the object recognition part 503 may re-recognize the object based on the acquired measurement information and image information. When the object is moved or a new object is detected by the re-recognition of the object, the setting part 504 may re-set the space attribute. In this case, the path generation part 505 may re-generate the moving path with the current position as the starting point in consideration of the re-set space attribute. In addition, the movement control part 507 may stop the movement of the shovel 100 when it recognizes that the shovel 100 is adjacent to the movement prohibited space by the re-generated moving path.

### (MODIFICATION OF EMBODIMENT ONE)

In the above-described embodiment, the case of performing semi-automatic control to support the operation of the operator has been described. However, the above-described embodiment is not limited to the method of performing semi-automatic control. Therefore, in the present modification, the case of performing manual control of the operator will be described.

In the present modification, attributes are set for each divided space based on objects detected near the shovel 100, as in the above-described embodiment.

The operation reception part 506 receives an operator's operation from the pressure sensor 29. The movement control part 507 controls one or more of the boom 4, the arm 5, the bucket 6, and the lower traveling body 1 according to the received operation.

The movement control part 507 controls one or more of the boom 4, the arm 5, the bucket 6, and the lower traveling body 1 according to the received operation.

Furthermore, the movement control part 507 restricts the movement of the boom 4, the arm 5, the bucket 6, and the lower traveling body 1 according to the set space attribute. For example, when any one or more of the boom 4, the arm 5, the bucket 6, and the lower traveling body 1 is under movement control according to the operation of the operator, the movement control part 507 performs control to restrict movement of any one or more of the boom 4, the arm 5, the bucket 6, and the lower traveling body 1 when any one of the boom 4, the arm 5, the bucket 6, and the lower traveling body 1 approaches the movement prohibited space. Thus, a part of the shovel 100 is restricted from moving into the movement prohibited space.

The shovel support device 50 according to the present modification enables the operator to operate as intended by performing the above-described control. Furthermore, the shovel support device 50 can improve safety by supporting the control so as to comply with the attributes set to the space such as the movement prohibited space even in the movement control by operation.

### (SECOND MODIFICATION OF EMBODIMENT ONE)

In the above-described embodiment, the case where the shovel 100 performs the object recognition, the setting of the attributes for the space, and the generation of the moving path has been described. However, in the present embodiment, the method for performing the object recognition, the setting of the attributes for the space, and the generation of the moving path is not limited to the method performed on the shovel 100 side, and the processing may be performed by an external device such as a cloud service.

For example, the acquisition part 501, the design data acquisition part 502, the object recognition part 503, the setting part 504, and the path generation part 505 may be implemented on the cloud service. The design data storage part D41 and the spatial correspondence storage part D42 may be uploaded in advance to the storage device on the cloud service.

The shovel 100 transmits detection results from various sensors provided in the shovel 100 to the cloud service using the communication device T1 provided in the shovel 100. For example, the shovel 100 transmits image information captured by the imaging device S6 and measurement information measured by the space recognition device S7 to the cloud service.

The cloud service generates a moving path based on the image information and measurement information received from the shovel 100 and transmits it to the shovel 100.

The shovel 100 receives the moving path from the cloud service. Thus, the shovel 100 controls one or more of the boom 4, the arm 5, the bucket 6, and the lower traveling body 1 along the moving path according to the operation from the operator, as in the above-described embodiment. Thus, as in the above-described embodiment, the operation load of the operator can be reduced.

Moreover, the cloud service is not limited to the method of generating even the moving path. For example, the cloud service may even set the attribute to the space. Then, the shovel 100 receives the result of setting the attribute by the cloud service. Then, the shovel support device 50 in the shovel 100 may generate the moving path based on the result of setting the attribute to the space.

In the present modification, the arithmetic load of the shovel 100 can be reduced by performing the above-described processing on the cloud service side. Therefore, since the installation of a controller with high computing performance in the shovel 100 is not required, cost can be reduced.

### (EMBODIMENT TWO)

In the above-described embodiment and modification, the case of controlling the shovel 100 by supporting the operation of the operator has been described. However, the present invention is not limited to the case of controlling the shovel 100 by supporting the operation of the operator. Therefore, in embodiment two, the case of automatic control of the shovel 100 will be described.

In the shovel support device 50 according to embodiment two, as in embodiment one, the generation of the moving path is performed.

Then, the movement control part 507 controls one or more of the boom 4, the arm 5, the bucket 6, and the lower traveling body 1 so as to move along the moving path. That is, in the present embodiment, the movement control part 507 controls one or more of the boom 4, the arm 5, the bucket 6, and the lower traveling body 1 without accepting the operation by the operator as in the above-described embodiment.

In the shovel 100 according to the present embodiment, the operator may or may not board the cabin 10. When an operator performs an operation while the movement control part 507 performs the automatic control, the control by the operation may be given priority.

Furthermore, the shovel 100 according to the present embodiment may transmit the image information captured by the imaging device S6 to an external device via the communication device T1. Thus, the automatic control performed by the shovel 100 can be remotely monitored.

In the present embodiment, since the operation by the operator is reduced, the operation burden can be reduced.

### (EMBODIMENT THREE)

In embodiment three, the case where the operator performs the remote operation of the shovel 100 will be described.

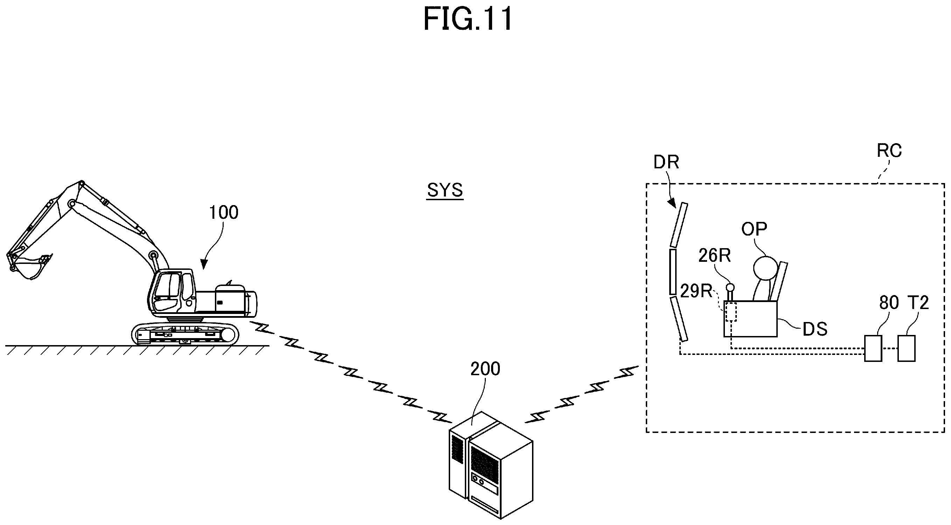

FIG. 11 is a schematic diagram illustrating an example of a configuration of a support system SYS of the shovel 100 according to the present embodiment. In the example shown in FIG. 11, the shovel 100 and a remote control room RC are connected through the information center 200. Thus, transmission and reception of information can be achieved between the shovel 100 and the remote control room RC.

The shovel 100 transmits detection results from various sensors provided in the shovel 100 to the remote control room RC using the communication device T1 provided in the shovel 100. For example, the shovel 100 transmits image information captured by the imaging device S6 and measurement information measured by the space recognition device S7 to the remote control room RC.

In the support system SYS according to the present embodiment, a remote control room RC is provided. The remote control room RC is provided with a display device DR, an operation device 26R, a pressure sensor 29R, an operation seat DS, a remote controller 80, and a communication device T2.

The remote controller 80 includes an acquisition part 501 provided in the shovel support device 50 of the above-described embodiment, a design data acquisition part 502, an object recognition part 503, a setting part 504, a path generation part 505, an operation reception part 506, and a movement control part 507. A storage unit (not shown) provided in the remote controller 80 includes a design data storage part D41 and a spatial correspondence storage part D42.

With the above-described configuration, the remote controller 80 can generate a moving path for the bucket 6 of the shovel 100 or the lower traveling body 1 to move based on information (including image information and measurement information) transmitted from the shovel 100.

Furthermore, the remote controller 80 displays the image information transmitted from the shovel 100 on the display device DR. Thus, the operator OP present in the operation seat DS can confirm the situation around the shovel 100 even if the operator OP is present in the remote control room RC.

The operator OP present in the operation seat DS of the remote control room RC operates the operation device 26R. The pressure sensor 29R detects the operation contents received by the operation device 26R. The movement control part 507 generates a control signal for moving the bucket 6 or the lower traveling body 1 along the moving path according to the detected operation contents. The communication device T2 transmits the generated control signal to the shovel 100. By transmitting the control signal, the remote controller 80 can control the shovel 100 in the same manner as in embodiment one.

The operation of the operator OP according to the present embodiment is not limited to the semi-automatic control as shown in embodiment one, but may be a manual operation as shown in the first modification of embodiment one.

In the present embodiment, the shovel 100 can be controlled from a remote location by performing the operation in the remote control room RC. Therefore, it is easy to secure the operator of the shovel 100 even when the work site is in a remote location.

### (MODIFICATION)

In the above-described embodiment, an example of setting an attribute corresponding to a space based on the correspondence stored in the spatial correspondence storage part D42 has been described. However, the method of storing the correspondence in advance is not limited. For example, the setting part 504 may set an attribute to a space using a trained model generated by machine learning. The machine learning may be performed by using deep learning or the like, or it may be performed by back propagation using a neural network, for example.

For example, the setting part 504 inputs image information of the imaging device S6, measurement information of the space recognition device S7, design data, setting conditions of the movement prohibited space, and the like to the trained model, thereby acquiring information in which the attribute is set for each space dividing the surroundings of the shovel 100.

The trained model is not limited to a method installed in the shovel 100, and may be implemented on a cloud service. That is, the shovel 100 can receive information in which the attribute is set for each space dividing the surroundings of the shovel 100 by transmitting image information of the imaging device S6, measurement information of the space recognition device S7, design data, setting conditions of the movement prohibited space, and the like to the cloud service. Then, the shovel 100 can generate a moving path based on the received information.

The trained model of the present modification is a model in which input information (image information of the imaging device S6, measurement information of the space recognition device S7, design data, and setting conditions of the movement prohibited space) and output information (information of attributes set for each divided space) are trained as training data.

The information to be input to the trained model is not limited to image information of the imaging device S6, measurement information of the space recognition device S7, design data, and setting conditions of the movement prohibited space. It is sufficient that at least one or more of these information is input. Furthermore, information other than image information of the imaging device S6, measurement information of the space recognition device S7, design data, and setting conditions of the movement prohibited space may be input.

The trained model may be retrained each time image information of the imaging device S6, measurement information of the space recognition device S7, design data, setting conditions of the movement prohibited space, and the like are input. The retraining is performed, for example, by a cloud service or a server for learning. In this case, a combination of input information and output information whose errors have been corrected with respect to output information (e.g., information that is incorrectly set to a space) corresponding to the input information is used as the training data. By using the retrained trained model, an accuracy of information to be output in the future can be improved. Errors in the output information may be corrected automatically or manually by an operator.

In the above-described embodiment and modification, an example provided with a bucket 6 as a working tool has been described. However, the above-described embodiment does not limit the working tool to the bucket 6. It may be a working tool capable of loading objects, for example, a lifting magnet.

In the above-described embodiment and modification, an example using a shovel 100 equipped with an engine 11 as a power source of the hydraulic drive system has been described. However, the above-described embodiment and modification are not limited to the method applied to a shovel equipped with an engine as a power source. For example, it may be applied to an electric shovel equipped with an electric motor instead of an engine as a power source. In the above-described embodiment and modification, an example using a shovel 100 as a working machine has been described. However, the above-described embodiment and modification are not limited to a shovel as a working machine, and any working machine capable of lifting a loaded object may be used.

### <ACTION>

According to the above-described embodiment and modification, an example of setting an attribute to the space around the shovel 100 based on the output from the space recognition device S7 and the imaging device S6 has been described. However, the data for setting the attribute is not limited to the data output from the space recognition device S7 and the imaging device S6. For example, an attribute may be set to the space around the shovel 100 based only on the measurement information output from the space recognition device S7.

Furthermore, according to the above-described embodiment and modification, an attribute is set to each space divided based on the object existing around the shovel 100. By performing control based on the attributes set for each space, it is possible to achieve control in consideration of the features of objects existing around the shovel 100. Thus, the shovel 100 can achieve improvement of the work efficiency. Furthermore, since the characteristics of the detected object can be considered by the attributes set to the space (e.g., whether the object moves or not can be considered), it is possible to achieve improvement of safety.

Furthermore, according to the above-described embodiment and the modification, it is possible to set the earth falling prevention space or the earth falling permission space for the space. For example, by setting the earth falling permission space, it is possible to achieve control considering the earth moving by the operation of the bucket 6 of the shovel 100. Therefore, the work efficiency can be improved. Furthermore, by setting the earth falling prevention space, it is possible to achieve control to prevent the earth loaded in the bucket 6 from falling on people or obstacles. Therefore, the safety can be improved.

Furthermore, according to the above-described embodiment and the modification, when a person is detected, the space obtained by adding a margin based on the position of the person is set as the movement prohibited space. Thus, since the movement prohibited space is set in consideration of the case where the person moves, the safety can be improved.

Furthermore, according to the above-described embodiments and modifications, an example of setting an attribute for each space in which the space around the shovel 100 is divided based on the object detected from the output from the space recognition device S7 is described based on the type of the detected object. By setting an attribute for each of the spaces thus divided, it is possible to control the shovel 100 in consideration of various situations around it. Therefore, the work efficiency can be improved.

In the above-described embodiments, an example of generating a moving path so that the earth not loaded in the bucket 6 are moved to the earth falling permission space has been described. Since the generation of the moving path restricts the movement of the earth into the earth falling permission space and the movement of the earth to other spaces, the work of removing the earth in other spaces can be reduced, and the work efficiency can be improved.

The embodiments of the work machine according to the present invention have been described above, but the present invention is not limited to these embodiments, but various variations and modifications may be made without departing from the scope of the present invention.

The present application is based on and claims priority to Japanese patent application no. 2022-173789 filed on October 28, 2022, with the Japanese Patent Office, the entire contents of which are hereby incorporated by reference.

### REFERENCE SIGNS LIST

- 100: shovel
- 1: lower traveling body
- 2: swivel mechanism
- 3: upper swivel body
- 4: boom (attachment)
- 5: arm (attachment)
- 6: bucket (working tool)
- 7: boom cylinder
- 8: arm cylinder
- 9: bucket cylinder
- S6: imaging device
- S7: space recognition device
- S8: positioning device
- D4: storage device
- D41: design data storage part
- D42: spatial correspondence storage part
- 30: controller
- 50: shovel support device
- 501: acquisition part
- 502: design data acquisition part
- 503: object recognition part
- 504: setting part
- 505: path generation part
- 506: operation reception part
- 507: movement control part

## Claims

1. A shovel comprising:
a lower traveling body; and
an upper swivel body mounted on the lower traveling body and capable of freely swiveling,
wherein configurations are made to set an attribute to a space surrounding the shovel based on an output from a space recognition device provided in the upper swivel body, and to control the shovel based on the attribute set to the space.

2. The shovel according to claim 1, further comprising an attachment attached to the upper swivel body, wherein a moving path for controlling at least one of the attachment or the lower traveling body is generated based on the attribute set to the space.

3. The shovel according to claim 2, wherein:
when an object is detected in the space based on an output from the space recognition device, a first permission attribute permitting movement of the shovel is set to the space based on the object detected; and
when the object is alternatively not detected in the space, a second permission attribute permitting movement of the shovel is set to the space.

4. The shovel according to claim 3, wherein any one or more of an attribute indicating that the attachment is movable, an attribute indicating that a travel movement is performable by the lower traveling body, and an attribute indicating that a load of the attachment is movable, are settable as the second permission attribute.

5. The shovel according to claim 3, wherein an attribute indicating a load mounted on the attachment as being movable, and permitting releasing of the load from the attachment is settable as the second permission attribute.

6. The shovel according to claim 3, wherein the moving path is generated so as to pass through the space in which the second permission attribute is set.

7. The shovel according to claim 6, wherein the moving path is a path for the lower traveling body to travel.

8. The shovel according to claim 1, further comprising an attachment attached to the upper swivel body,
wherein when an object is detected in the space by the output from the space recognition device, the attribute for restricting movement of the shovel is set based on the object detected, or the attribute for restricting movement of the attachment is set based on information concerning construction of the space.

9. The shovel according to claim 8, wherein when a person is detected in the space, the attribute for restricting movement of the shovel is set to the space with a predetermined margin added to the space based on a position of the person.

10. The shovel according to claim 9, wherein when the person is detected in the space, the attribute for restricting movement of a load of the attachment is set to a space above the person.

11. The shovel according to claim 2, wherein:
when earth is detected in the space based on an output from the space recognition device, the attribute permitting movement of the earth is set to an adjacent space adjacent to the space in which the earth is detected based on a position of the earth detected;
when excavation is performed using the attachment, the moving path of the attachment is generated so that the earth moved by the excavation without being loaded in the attachment is moved to the adjacent space.

12. The shovel according to claim 2, wherein:
when earth is detected in the space based on an output from the space recognition device, the attribute permitting movement of the earth is set to an adjacent space adjacent to the space in which the earth is detected based on a position of the earth detected;
when a control of pushing away the earth is performed by using the attachment, the moving path of the attachment is generated so that the earth moved by the control of pushing away is moved to the adjacent space.

13. The shovel according to claim 2, wherein the shovel is controlled so as to follow the moving path generated.

14. The shovel according to claim 1, wherein the attribute is set based on a type of an object detected for each divided space in which the space surrounding the shovel is divided based on the object detected from the output from the space recognition device.

15. The shovel according to claim 1, wherein configurations of a plurality of attributes are settable to the space surrounding the shovel based on the output from the space recognition device.
